# EUROPEAN PATENT APPLICATION

(11) **EP 4 414 770 A1**
(43) Date of publication of application: **14.08.2024**
(21) Application number: 22878359.3
(22) Date of filing: 26.09.2022
(51) Int. Cl.: G02B 27/01

(54) **IMAGE PROJECTING DEVICE AND IMAGE PROJECTING METHOD**

(30) Priority: 05.10.2021 JP 2021164153; 27.10.2021 JP 2021175994
(71) Applicant: KOITO MANUFACTURING CO., LTD., Minato-ku, Tokyo, 108-8711 (JP)
(72) Inventor: YAMAMOTO, Hideaki, Shizuoka-shi, Shizuoka 424-8764 (JP); OHASHI, Yosuke, Shizuoka-shi, Shizuoka 424-8764 (JP)
(74) Representative: Grünecker Patent- und Rechtsanwälte PartG mbB
(86) International application number: PCT/JP2022/035716
(87) International publication number: WO 2023/058488

(57) **Abstract**

An image projecting device (100) that radiates an image (70) to be projected to a display (60) that displays a virtual image is provided with: an image radiating unit (10) that radiates an image; a beam splitter (20) that splits the beam of the radiated image at least into a first image beam and a second image beam; a first optical part (31, 32) that radiates the first image beam as the image (70) to be projected in a viewpoint direction via the display (60); and a second optical part (33) that radiates the second image beam in the viewpoint direction without the intervention of the display (60).

## Description

### TECHNICAL FIELD

The present disclosure relates to an image projecting device, and more particularly, to an image projecting device and an image projecting method configured to emit a projection image on a display unit for displaying a virtual image.

### BACKGROUND ART

In the related art, an instrument panel for lighting and displaying an icon is used as a device for displaying various kinds of information in a vehicle. Due to an increase in an amount of information to be displayed, it has also been proposed to embed an image display device in the instrument panel or to form the entire instrument panel with the image display device.

Since the instrument panel is located below a windshield of the vehicle, for a driver to visually recognize the information displayed on the instrument panel, it is necessary to move the line of sight downward while driving, which is undesirable. There has also been proposed a head up display (hereinafter, referred to as HUD) configured to project an image onto the windshield so that the driver can read information when visually recognizing the front of the vehicle (for example, see Patent Literatures 1 and 2).

### CITATION LIST

### PATENT LITERATURE

Patent Literature 1: JP2019-119248A
Patent Literature 2: JP2019-119262A

### SUMMARY OF INVENTION

### TECHNICAL PROBLEM

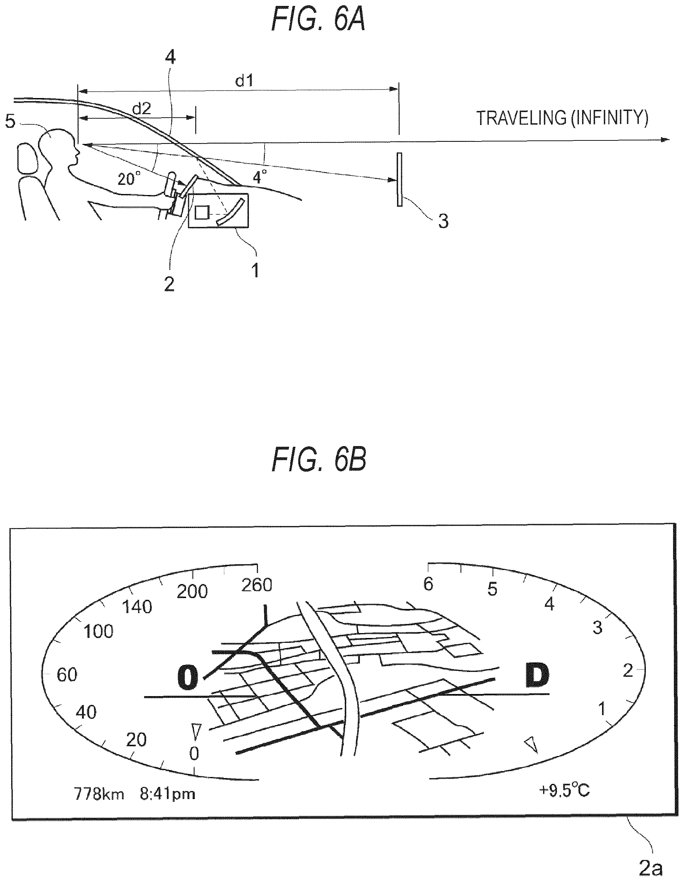

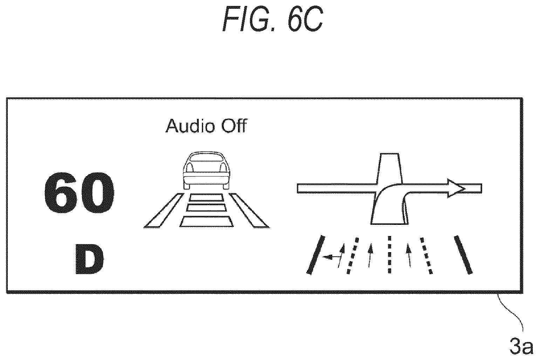

FIGS. 6A, 6B, and 6C are schematic diagrams showing an information presentation method using a HUD device 1 proposed in the related art. FIG. 6A shows an arrangement of devices inside the vehicle. FIG. 6B shows an instrument image 2a displayed on a meter unit 2. FIG. 6C shows an auxiliary image 3a projected as a virtual image 3. In the information presentation method in the related art, the meter unit 2 is installed in the vehicle separately from the HUD device 1, and the virtual image 3 is projected from the HUD device 1 via a windshield 4. Here, instruments defined by the law are displayed, as an instrument image 2a, in the meter unit 2. The auxiliary image 3a supporting driving is projected as the virtual image 3. In recent years, there is a case where the design of an instrument is improved by using a liquid crystal display device or the like as the meter unit 2.

As shown in FIGS. 6A to 6C, since the virtual image 3 is projected several degrees (4 degrees in FIG. 6A) downward from the horizontal direction while the vehicle is traveling, it is possible to reduce movement of the line of sight for the driver 5 to visually recognize supplementary information. By moving the line of sight further downward (20 degrees in FIG. 6A), the driver 5 can visually recognize the instruments displayed on the meter unit 2 well. However, in the related art, since it is necessary to arrange the HUD device 1 and the meter unit 2 separately in an instrument panel of the vehicle, it is difficult to achieve space saving. In addition, since a position where the meter unit 2 is installed is inevitably determined at a position where the driver 5 can visually recognize the meter unit 2 well, there is a problem that a degree of freedom in design when the HUD device 1 is arranged is low.

In order to present more information, it is also proposed to project a plurality of images on the windshield using a driving support HUD device. However, in order to project and form the plurality of images as virtual images at different distances, it is necessary to provide a plurality of image irradiation units and projection optical systems, and there is a problem in that the degree of freedom in design is low in order to house the plurality of image irradiation units and projection optical systems in the instrument panel. Therefore, the applicant of the present application has proposed an image projecting device in which a plurality of images are displayed in one image irradiation unit and a light path of each image is branched by a light branching unit such as a prism, to achieve space saving.

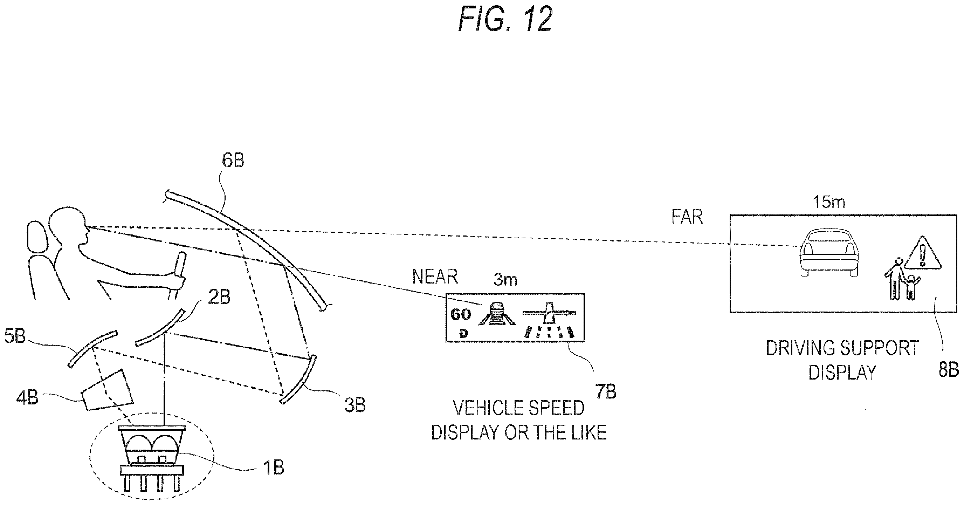

FIG. 12 is a schematic diagram showing an image projecting device in the related art for projecting a plurality of images on one screen. As shown in FIG. 12, the image projecting device in the related art includes an image irradiation unit 1B, a reflecting mirror 2B, a free-form surface mirror 3B, a light branching unit 4B, a free-form surface mirror 5B, and a windshield 6B. In such an image projecting device, a part of light emitted from the image irradiation unit 1B is branched by the light branching unit 4B, reflected by the free-form surface mirror 5B, the free-form surface mirror 3B, and the windshield 6B to reach a viewpoint of the driver, and a virtual image 8B is formed in the distance. Another part of the light emitted from the image irradiation unit 1B is reflected by the reflecting mirror 2B, the free-form surface mirror 3B, and the windshield 6B to reach the viewpoint of the driver, and a virtual image 7B is formed in the near.

In the image projecting device of the related art, the virtual image 8B is projected in the distance (about 15 m from the driver in FIG. 12) that is several degrees downward the horizontal direction, and it is possible to reduce the movement of the line of sight for the driver to visually recognize driving support information. The virtual image 7B is projected in the near further downward (about 3 m from the driver in FIG. 12), and the driver can visually recognize vehicle speed display or the like well by moving the line of sight. However, since the vehicle per se and the image projecting device vibrate according to a traveling state and a road surface state while the vehicle is traveling, there is a problem in that imaging positions of the virtual images 7B and 8B are displaced due to the vibration and visibility is reduced.

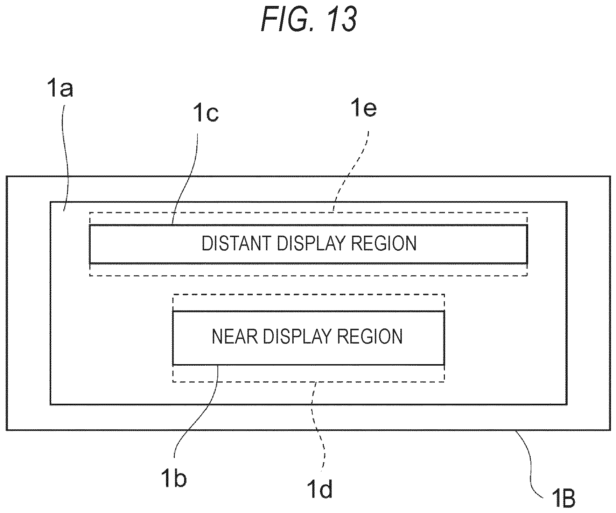

FIG. 13 is a schematic diagram showing a display region displayed by the image irradiation unit 1B in the image projecting device of the related art. In the image irradiation unit 1B, an entire display region 1a indicates the entire region in which an image can be displayed. The entire display region 1a is provided with a near display region 1b configured to display a near image formed in the near and a distant display region 1c configured to display a distant image formed in the distance. In the image projecting device shown in FIG. 12, light for irradiating the near image displayed in the near display region 1b is formed as the virtual image 7B in the near via the reflecting mirror 2B, and light for irradiating the distant image displayed in the distant display region 1c is formed as the virtual image 8B in the distance via the light branching unit 4B. However, since the vehicle and the image projecting device vibrate when the vehicle is traveling, the imaging positions of the virtual images 7B and 8B fluctuate to a background, and the visibility of the image deteriorates.

In order to prevent changes in the imaging positions of the virtual images 7B and 8B due to the vibration when the vehicle is traveling, a method is considered in which a sensor configured to detect the vibration of the vehicle is provided in advance and an image display position in the image irradiation unit 1B is corrected according to a detection result of the sensor. When the sensor detects the vibration of the vehicle, a vibration direction and a displacement amount are calculated, and the display positions of the near display region 1b and the distant display region 1c are changed within margin regions 1d and 1e, respectively. Accordingly, a displacement of the virtual images 7B and 8B due to the vibration is offset by a displacement in the margin regions 1d and 1e, and it is possible to prevent the changes in the imaging positions of the near image and the distant image.

However, in a method of changing the display positions of the near display region 1b and the distant display region 1c in the margin regions 1d and 1e, it is necessary to secure the margin regions 1d and 1e to offset the vibration in the entire display region 1a. This means that, for example, when a displacement amount of about 15% is secured above and below the near display region 1b and the distant display region 1c as shown in FIG. 13, a size of the image that can be displayed is reduced by 30%. Accordingly, sizes of the images that can be formed as the virtual images 7B and 8B cannot be increased, and the visibility of the near image and the distant image displayed as the virtual images 7B and 8B decreases.

An object of the present disclosure is to provide an image projecting device capable of achieving space saving and an improvement in a degree of freedom in design while displaying instruments and projecting an auxiliary image as a virtual image.

Further, an object of the present disclosure is to provide an image projecting device and an image projecting method capable of improving a visibility of an image by preventing a fluctuation in an imaging position due to vibration of a vehicle while ensuring an effective image display area.

### SOLUTION TO PROBLEM

An image projecting device of the present disclosure is an image projecting device for emitting a projection image on a display unit configured to display a virtual image, the image projecting device including: an image irradiation unit configured to emit an image; a light branching unit configured to branch light for emitting the image into at least first image light and second image light; a first optical unit configured to emit, as the projection image, the first image light in a viewpoint direction, via the display unit; and a second optical unit configured to emit the second image light in the viewpoint direction, without passing through the display unit.

In the image projecting device of the present disclosure, the image emitted from the image irradiation unit is branched into the first image light and the second image light by the light branching unit, the first image light is emitted by the first optical unit via the display unit, and the second image light is emitted by the second optical unit without passing through the display unit. Accordingly, it is possible to achieve space saving and an improvement in a degree of freedom in design while displaying instruments with the second image light and projecting an auxiliary image as the projection image (virtual image) with the first image light.

An image projecting device of the present disclosure is an image projecting device for emitting a projection image on a display unit configured to display a virtual image, the image projecting device including: an image irradiation unit configured to emit a first image; a first optical unit configured to emit, as first image light, the first image in a viewpoint direction, via the display unit; and a first optical drive unit configured to change an incident angle of the first image light to the display unit, based on vibration information.

In the image projecting device according to the present disclosure, a correction amount of an incident angle of the first image light to the display unit is calculated based on the vibration information, and the first optical drive unit is controlled in accordance with the correction amount to correct an imaging position of the first image. Therefore, it is possible to prevent a fluctuation in the imaging position due to a vibration of the vehicle and improve visibility of the image while ensuring an effective image display area.

An image projecting method of the present disclosure is an image projecting method for emitting a projection image on a display unit configured to display a virtual image, the image projecting method including: emitting a first image, as first image light, in a viewpoint direction, via the display unit; acquiring vibration information; and changing an incident angle of the first image light to the display unit, based on the vibration information to correct an imaging position of the first image.

### ADVANTAGEOUS EFFECTS OF INVENTION

According to the present disclosure, it is possible to provide an image projecting device capable of achieving the space saving and the improvement in the degree of freedom in design while displaying the instruments and projecting the auxiliary image as the virtual image.

In the present disclosure, it is possible to provide an image projecting device and an image projecting method capable of improving the visibility of the image by preventing the fluctuation in the imaging position due to the vibration of the vehicle while ensuring an effective image display area.

### BRIEF DESCRIPTION OF DRAWINGS

[FIG. 1] FIG. 1 is a schematic diagram showing a configuration of an image projecting device 100 according to a first embodiment.
[FIG. 2] FIG. 2 is a schematic diagram showing an image emitted from the image irradiation unit 10.
[FIG. 3] FIG. 3 is a graph showing a relation between an incident angle and a reflectivity of light to a windshield 60.
[FIG. 4] FIG. 4 is a schematic diagram showing a configuration of an image projecting device 110 according to a second embodiment.
[FIG. 5] FIG. 5 is a schematic diagram showing a configuration of an image projecting device 120 according to a third embodiment.
[FIG. 6A] FIG. 6A is a schematic diagram showing an information presentation method using a HUD device 1 proposed in the related art and shows an arrangement of devices inside a vehicle.
[FIG. 6B] FIG. 6B is a schematic diagram showing the information presentation method using the HUD device 1 proposed in the related art and shows an instrument image 2a displayed on a meter unit 2.
[FIG. 6C] FIG. 6C is a schematic diagram showing the information presentation method using the HUD device 1 proposed in the related art and shows an auxiliary image 3a projected as a virtual image 3.
[FIG. 7] FIG. 7 is a block diagram showing a configuration of an image projecting device 100B according to a fourth embodiment.
[FIG. 8] FIG. 8 is a schematic diagram showing a configuration of the image projecting device 100B according to the fourth embodiment.
[FIG. 9] FIG. 9 is a schematic diagram showing a display region of an image emitted from an image irradiation unit 10B in the image projecting device 100B according to the fourth embodiment.
[FIG. 10] FIG. 10 is a flowchart showing steps of an image projecting method according to the fourth embodiment.
[FIG. 11] FIG. 11 is a schematic diagram showing a configuration of an image projecting device 110B according to a fifth embodiment.
[FIG. 12] FIG. 12 is a schematic diagram showing an image projecting device in the related art for projecting a plurality of images on one screen.
[FIG. 13] FIG. 13 is a schematic diagram showing a display region of an image displayed by the image irradiation unit 1B in the image projecting device of the related art.

### DESCRIPTION OF EMBODIMENTS

### (First Embodiment)

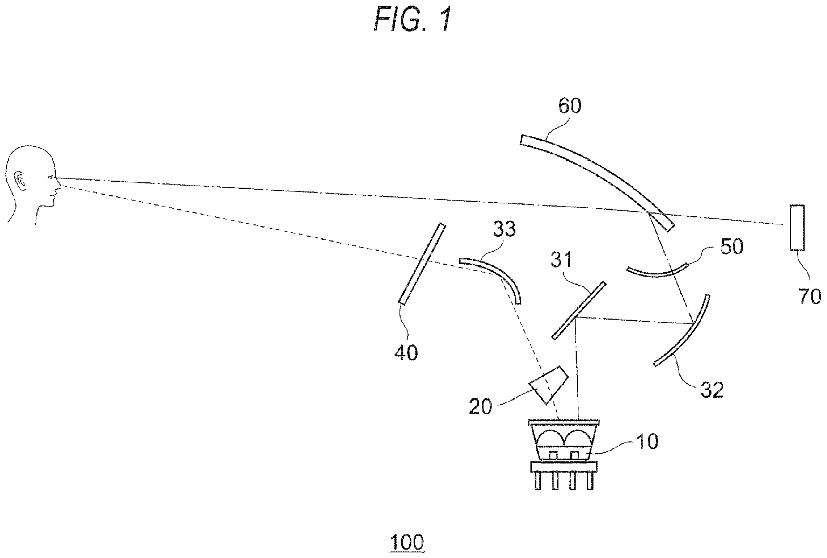

Hereinafter, embodiments of the present disclosure will be described in detail with reference to the drawings. The same or equivalent components, members, and processes shown in the drawings are denoted by the same reference numerals, and redundant descriptions thereof will be omitted as appropriate. FIG. 1 is a schematic diagram showing a configuration of an image projecting device 100 according to the present embodiment. As shown in FIG. 1, the image projecting device 100 includes an image irradiation unit 10, a light branching unit 20, a reflecting mirror 31, a free-form surface mirror 32, a free-form surface mirror 33, a direct display unit 40, and an external light cut filter 50, and is configured to project a virtual image 70 via a windshield (display unit) 60. The image projecting device 100 includes a control unit (not shown) that is connected to each unit to be able to communicate information and that is configured to control each unit. A configuration of the control unit is not limited, and examples thereof include a central processing unit (CPU) for performing information processing, a memory device, a recording medium, and an information communication device. The control unit is configured to control an operation of each unit according to a predetermined program, and configured to send information (image information) including an image to the image irradiation unit 10.

The image irradiation unit 10 is a part configured to emit light including an image, based on image information from the control unit. A specific configuration of the image irradiation unit 10 is not limited, and examples thereof include a liquid crystal display device, an organic EL display device, and a combination of a laser light source and a light modulation element. In the example shown in FIG. 1, the image irradiation unit 10 is configured to irradiate a light emitting diode (LED) with light from a back side of the liquid crystal display device. As described later, the image irradiation unit 10 includes a first region 11 and a second region 12 that are configured to display a first image and a second image, respectively.

The light branching unit 20 is an optical member configured to branch the light of the image emitted from the image irradiation unit 10. The light branching unit 20 is configured to branch light into at least first image light that is the first image displayed in the first region 11, and second image light that is the second image displayed in the second region 12. A structure of the light branching unit 20 is not limited as long as the light branching unit 20 is an optical member that branches the light, and is, for example, a prism. A method in which an incident angle and a reflection angle of the light are made different by a reflecting mirror may be used. In the example shown in FIG. 1, the light branching unit 20 is a prism, and the prism is arranged to overlap the second region of the image irradiation unit 10. The first image light emitted from the first region 11 reaches the reflecting mirror 31, and the second image light emitted from the second region 12 reaches the free-form surface mirror 33 along a path different from that of the first image light by the light branching unit 20.

Here, arranging the light branching unit 20 to overlap the image irradiation unit 10 means that a region where the light branching unit 20 is arranged overlaps an image display region of the image irradiation unit 10 in a plan view. A case where the light branching unit 20 and the image irradiation unit 10 are in contact with each other and a case where the light branching unit 20 and the image irradiation unit 10 are not in contact with each other are included in the overlapping arrangement. A case where an optical member configured to transmit light or a holding member for maintaining the distance between the light branching unit 20 and the image irradiation unit 10 is interposed between the light branching unit 20 and the image irradiation unit 10 is also included in the overlapping arrangement.

The reflecting mirror 31 is an optical member on which the first image light emitted from the image irradiation unit 10 is incident and which is configured to reflect the first image light toward a free-form surface mirror 32 direction. In the example shown in FIG. 1, the reflecting mirror 31 is a flat mirror. The reflecting mirror 31 has an optical design necessary for projecting the first image light as the virtual image 70, and may be a concave mirror, a convex mirror, a free-form surface mirror, and the like, as necessary. The reflecting mirror 31 may be omitted, and the first image light from the image irradiation unit 10 may directly enter the free-form surface mirror 32.

The free-form surface mirror 32 is a concave mirror on which the first image light reflected by the reflecting mirror 31 is incident, and which is configured to reflect the first image light toward a windshield 60 direction. In order to project the virtual image 70 via the windshield 60, a reflection surface of the free-form surface mirror 32 is designed such that a light diameter is enlarged toward a viewpoint direction of a driver. Here, the enlargement of the light diameter in the viewpoint direction includes not only the case where the light diameter is enlarged uniformly after the reflection but also the case where the light diameter is enlarged after being reduced and imaged at an intermediate point.

The free-form surface mirror 33 is an optical member on which the second image light is incident via the light branching unit 20, and which is configured to reflect the second image light toward a direct display unit 40 direction. The free-form surface mirror 33 corresponds to an enlarging optical unit configured to cause the reflected second image light to reach the direct display unit 40 while enlarging the light diameter thereof, and is configured to display the second image on the direct display unit 40 with an area larger than an area of a second region on the image irradiation unit 10.

The direct display unit 40 is an optical member on which the second image light reflected by the free-form surface mirror 33 is incident, and which is configured to allows the driver to directly visually recognize the second image light. A configuration of the direct display unit 40 is not limited as long as the driver can visually recognize the second image light that reaches the direct display unit 40, and may be a plate glass, a retardation film, or a transmission screen that transmits visible light. In the case where the direct display unit 40 is a transmission screen, the second image light emitted to a rear surface is diffused by the transmission screen, and thus the visibility can also be improved when visually recognizing through polarized glasses or from an oblique direction. In the case where the direct display unit 40 is a retardation film, a polarized light plane of the second image light and a fast axis of the retardation film are preferably different from each other by a predetermined angle (typically 45 degrees). By making the fast axis different from the polarized light plane, the second image light is converted into circularly polarized light and travels in the viewpoint direction, and thus the visibility can be improved even when the driver uses polarized glasses.

The external light cut filter 50 is an optical member that is arranged on a path of the first image light between the image irradiation unit 10 and the windshield 60, and that has a wavelength characteristic of blocking infrared light and/or ultraviolet light and transmitting the visible light. In FIG. 1, although the external light cut filter 50 is arranged between the windshield 60 and the free-form surface mirror 32, and an arrangement location of the external light cut filter 50 is not limited as long as external light incident on the image irradiation unit 10 can be cut. By arranging the external light cut filter 50, the infrared light and/or ultraviolet light included in the external light such as solar light incident from above the windshield 60 is blocked. Accordingly, when the solar light reaches the image display region of the image irradiation unit 10 via the free-form surface mirror 32 and the reflecting mirror 31, it is possible to reduce a temperature rise of the image irradiation unit 10 and deterioration of a display surface. Since the external light cut filter 50 is configured to transmit the visible light, the first image light favorably transmits the external light cut filter 50 and does not affect the projection of the virtual image 70.

The windshield 60 is a member that is provided in front of a driver's seat of the vehicle and transmits the visible light. The windshield 60 is configured to reflect the first image light incident from the free-form surface mirror 32 on an inner surface of the vehicle toward the viewpoint direction, and is configured to transmit the light from the outside of the vehicle toward the viewpoint direction. The windshield 60 corresponds to a display unit of the present disclosure. Here, the display unit is the windshield 60. A combiner may be provided as the display unit different from the windshield 60 to reflect light from the free-form surface mirror 32 toward the viewpoint direction. A position of the windshield 60 is not limited to the front of the vehicle. The windshield 60 may be arranged on a lateral side or a rear side of the vehicle as long as the windshield 60 projects an image to the viewpoint of a passenger.

The virtual image 70 is an image displayed to be formed in the space in a case where the first image light reflected by the windshield 60 reaches the viewpoint (eye boxes) of the driver or the like. A position where the virtual image 70 is formed is determined by a spread angle when the light emitted from the image irradiation unit 10 travels in the viewpoint direction after being reflected by the reflecting mirror 31, the free-form surface mirror 32, and the windshield 60.

In the example shown in FIG. 1, a combination of the reflecting mirror 31, the free-form surface mirror 32, and the external light cut filter 50 corresponds to a first optical unit of the present disclosure. The image projecting device 100 is configured to emit the first image light, as the projection image, in the viewpoint direction via the windshield (display unit) 60. A combination of the light branching unit 20, the free-form surface mirror 33, and the direct display unit 40 corresponds to a second optical unit of the present disclosure. The image projecting device 100 is configured to emit the second image light in the viewpoint direction without passing through the windshield (display unit) 60. A convex lens or a concave lens may be arranged on the first optical unit or the second optical unit as necessary, and the light diameter may be enlarged or reduced.

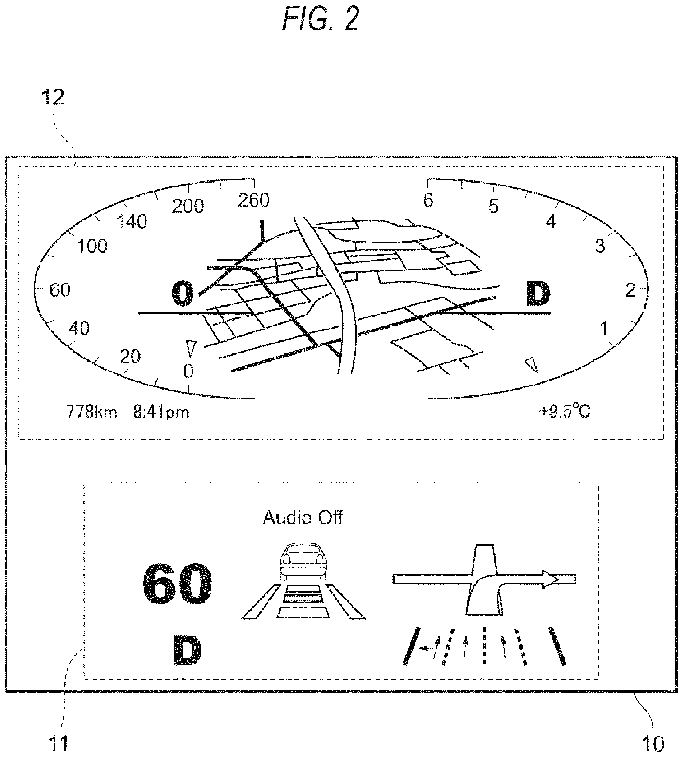

FIG. 2 is a schematic diagram showing an image emitted from the image irradiation unit 10. Of the entire region displaying the image of the image irradiation unit 10, the first image is displayed in the first region 11, and the second image is displayed in the second region 12. In the example shown in FIG. 2, as the first image displayed in the first region 11, auxiliary information relating to driving, such as a speed, a volume indicator, and a traveling direction guide, is displayed. As the second image displayed in the second region 12, a speedometer, a car navigation screen, and instruments such as driving mode information are displayed.

In the image projecting device 100 shown in FIG. 1, the prism serving as the light branching unit 20 is arranged at a position overlapping the second region 12, and paths of the first image light from the first region 11 and the second image light from the second region 12 are branched. The first image displayed in the first region 11 reaches the viewpoint of the driver via the reflecting mirror 31, the free-form surface mirror 32, the external light cut filter 50, and the windshield 60. As described above, since the first image light travels with an enlarged light diameter in the viewpoint direction, the driver visually recognizes that the virtual image 70 is displayed as the projection image at a position farther than the windshield 60. The second image displayed in the second region 12 reaches the viewpoint of the driver via the light branching unit 20, the free-form surface mirror 33, and the direct display unit 40. Accordingly, the driver visually recognizes that the second image is displayed on the direct display unit 40.

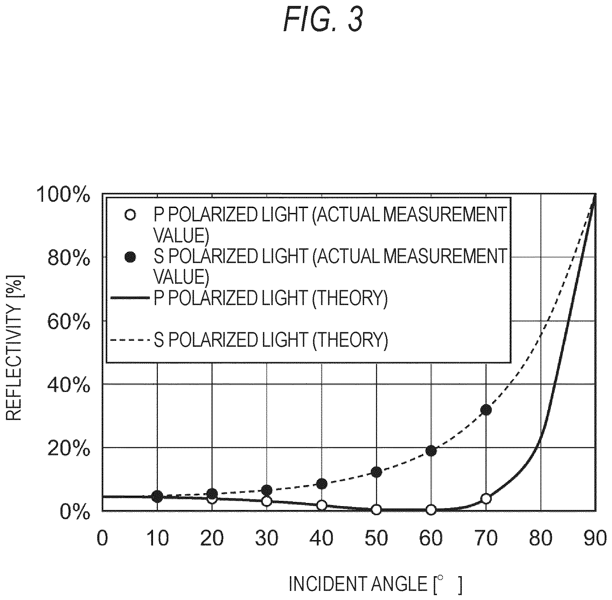

FIG. 3 is a graph showing a relation between the incident angle and the reflectivity of light to the windshield 60. In FIG. 3, a horizontal axis represents the incident angle of the light to the windshield 60, and a vertical axis represents a relative reflectivity when the incident angle of 90 degrees is 100%. A solid line and a broken line in the drawing indicate theoretical values of P polarized light and S polarized light, respectively, and white circles and black circles indicate measured values of the P polarized light and the S polarized light, respectively. As shown in FIG. 3, since a reflectivity of the P polarized light significantly decreases in the vicinity of an incident angle of 60 degrees to the windshield 60, it is preferable to arrange the free-form surface mirror 32 at a position where the incident angle is 55 degrees or less or 65 degrees or more.

In a case where the free-form surface mirror 32 is arranged such that the incident angle of the first image light to the windshield 60 is 55 degrees or less or 65 degrees or more, a ratio of reflected light including the P polarized light increases as shown in FIG. 3. Accordingly, even when the driver uses the polarized glasses and the S polarized light is cut by the polarized glasses, the driver can visually recognize the virtual image 70 projected with the first image light.

As described above, in the image projecting device of the present disclosure, the image emitted from the image irradiation unit 10 is branched into the first image light and the second image light by the light branching unit 20, the first image light is emitted by the first optical unit via the windshield 60, and the second image light is emitted by the second optical unit without passing through the windshield 60. As a result, the first image and the second image are displayed by one image irradiation unit 10, so that space saving and an improvement in a degree of freedom in design can be achieved. In addition, since the second image light is directly displayed while the virtual image 70 is projected with the first image light, it is possible to achieve the space saving and the improvement in the degree of freedom in design while displaying the instruments with the second image light and projecting an auxiliary image as the projection image (virtual image) with the first image light.

In addition, when the light branching unit 20 is a prism, optical design when partially covering the image irradiation unit 10 and branching a part of the light is facilitated. In addition, compared to the case where the light is branched using a reflecting mirror, it is possible to reduce a size of the device by reducing a volume for securing for branching light. In particular, in a case where the light branching unit 20 is arranged to overlap the second region 12, an area ratio of the second region 12 to the image irradiation unit 10 is greater than that of the first region 11. Therefore, it is more advantageous for downsizing when the light branching unit 20 is a prism than when the light branching unit 20 is a reflecting mirror. In addition, although a chromatic aberration occurs in a lens or a prism, an angle of the prism is a parameter in the prism, regularity of the chromatic aberration is high, and by performing color correction in advance in image processing, aberration correction becomes easy.

### (Second Embodiment)

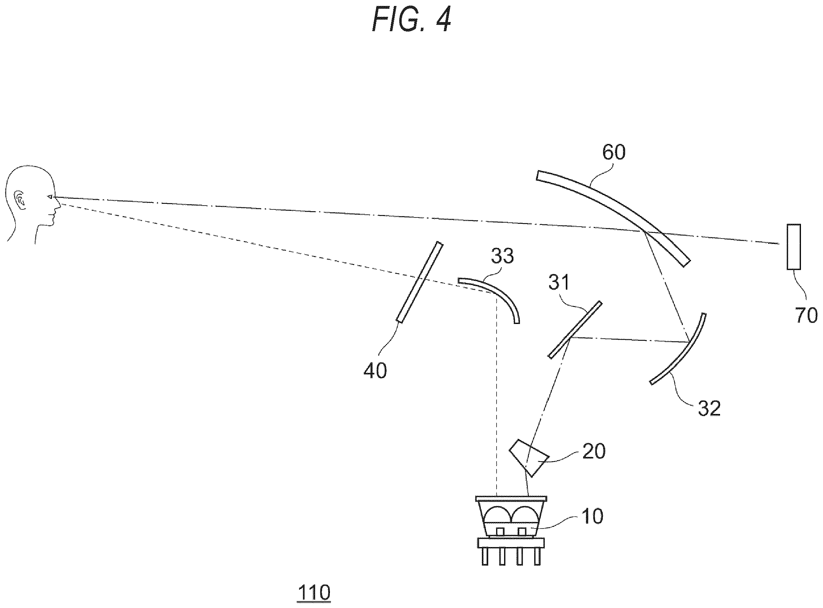

Next, a second embodiment of the present disclosure will be described with reference to FIG. 4. Description of contents overlapping with the first embodiment will be omitted. FIG. 4 is a schematic diagram showing a configuration of an image projecting device 110 according to the present embodiment. The present embodiment is different from the first embodiment in that the light branching unit 20 is included in the first optical unit.

As shown in FIG. 4, the image projecting device 110 includes the image irradiation unit 10, the light branching unit 20, the reflecting mirror 31, the free-form surface mirror 32, the free-form surface mirror 33, and the direct display unit 40, and is configured to project the virtual image 70 via the windshield (display unit) 60. In the present embodiment, the light branching unit 20 is arranged between the image irradiation unit 10 and the reflecting mirror 31, the light branching unit 20 is formed of a prism, and a material forming the prism contains an infrared light absorbing material.

In the example shown in FIG. 4, a combination of the light branching unit 20, the reflecting mirror 31, and the free-form surface mirror 32 corresponds to a first optical unit of the present disclosure. The image projecting device 110 is configured to emit first image light, as a projection image, in a viewpoint direction via the windshield (display unit) 60. A combination of the free-form surface mirror 33 and the direct display unit 40 corresponds to a second optical unit of the present disclosure. The image projecting device 110 is configured to emit the second image light in the viewpoint direction without passing through the windshield (display unit) 60.

In the image projecting device 110 shown in FIG. 4, the prism serving as the light branching unit 20 is arranged at a position overlapping the first region 11, and is configured to branch paths of the first image light from the first region 11 and the second image light from the second region 12. The first image displayed in the first region 11 reaches a viewpoint of a driver via the light branching unit 20, the reflecting mirror 31, the free-form surface mirror 32, and the windshield 60. As described above, since the first image light travels with an enlarged light diameter in the viewpoint direction, the driver visually recognizes that the virtual image 70 is displayed as the projection image at a position farther than the windshield 60. The second image displayed in the second region 12 reaches the viewpoint of the driver via the free-form surface mirror 33 and the direct display unit 40. Accordingly, the driver visually recognizes that the second image is displayed on the direct display unit 40.

As the light branching unit 20, the prism is implemented by using a resin or glass having a high refractive index that is configured to transmit visible light as a base material, and the base material contains an infrared light absorbing material that is configured to absorb infrared light. The light branching unit 20 may contain an ultraviolet light absorbing material. As a result, it is possible to block infrared light and/or ultraviolet light included in external light such as solar light incident from above the windshield 60 at the light branching unit 20 arranged between the image irradiation unit 10 and the windshield 60, and to reduce a temperature rise of the image irradiation unit 10.

Also in the image projecting device 110 of the present embodiment, the image emitted from the image irradiation unit 10 is branched into the first image light and the second image light by the light branching unit 20, the first image light is emitted via the windshield 60 by the first optical unit, and the second image light is emitted by the second optical unit without passing through the windshield 60. Accordingly, it is possible to achieve space saving and an improvement in a degree of freedom in design while displaying instruments with the second image light and projecting an auxiliary image as the projection image (virtual image) with the first image light.

### (Third Embodiment)

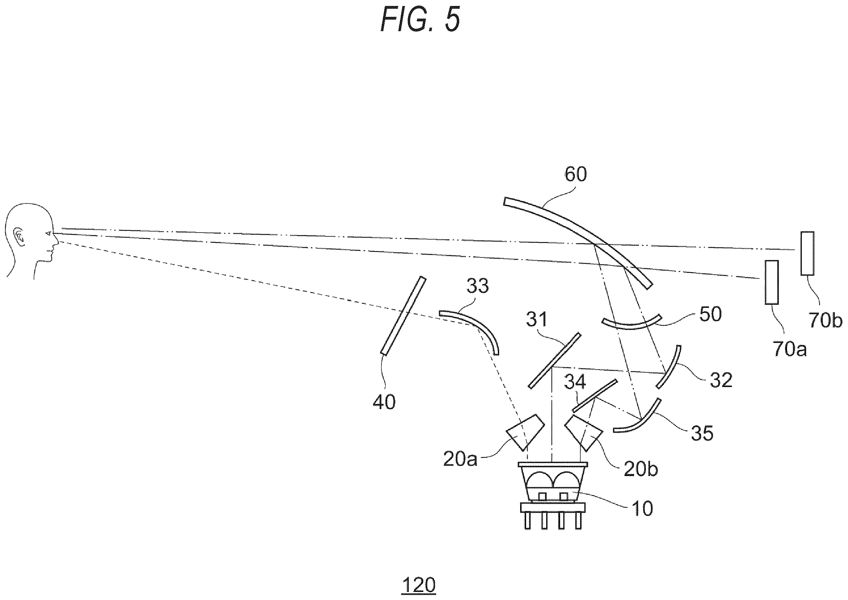

Next, a third embodiment of the present disclosure will be described with reference to FIG. 5. Description of contents overlapping with the first embodiment will be omitted. FIG. 5 is a schematic diagram showing a configuration of an image projecting device 120 according to the present embodiment. The image projecting device 120 of the present embodiment is different from the first embodiment in that a plurality of light branching units 20 are provided.

As shown in FIG. 5, the image projecting device 120 includes the image irradiation unit 10, light branching units 20a and 20b, the reflecting mirror 31, the free-form surface mirror 32, the free-form surface mirror 33, a reflecting mirror 34, a free-form surface mirror 35, the direct display unit 40, and the external light cut filter 50, and is configured to project virtual images 70a and 70b via the windshield (display unit) 60. In the present embodiment, in the display region of the image irradiation unit 10, a first image is displayed in the first region 11, a second image is displayed in the second region 12, and a third image is displayed in a third region.

The light branching units 20a and 20b are optical members configured to branch light of an image emitted from the image irradiation unit 10. In the example shown in FIG. 5, the light branching units 20a and 20b are prisms, and the respective prisms are arranged to overlap the second region 12 and the third region of the image irradiation unit 10. The reflecting mirror 34 is an optical member on which third image light emitted from the image irradiation unit 10 is incident and which is configured to reflect the third image light toward a free-form surface mirror 35 direction. The free-form surface mirror 35 is a concave mirror on which the third image light reflected by the reflecting mirror 34 is incident, and which is configured to reflect the third image light toward a windshield 60 direction. In order to project a virtual image 70b via the windshield 60, a reflection surface of the free-form surface mirror 35 is designed such that a light diameter is enlarged toward a viewpoint direction of a driver.

In the example shown in FIG. 5, a combination of the reflecting mirror 31, the free-form surface mirror 32, and the external light cut filter 50 corresponds to a first optical unit of the present disclosure. The image projecting device 120 is configured to emit first image light, as a projection image, in the viewpoint direction via the windshield (display unit) 60. A combination of the light branching unit 20a, the free-form surface mirror 33, and the direct display unit 40 corresponds to a second optical unit of the present disclosure. The image projecting device 120 is configured to emit the second image light in the viewpoint direction without passing through the windshield (display unit) 60. A combination of the light branching unit 20b, the reflecting mirror 31, the free-form surface mirror 32, and the external light cut filter 50 corresponds to a third optical unit of the present disclosure. The image projecting device 120 is configured to emit the third image light, as a projection image, in the viewpoint direction through the windshield (display unit) 60. Although FIG. 5 shows an example in which the free-form surface mirror 32 and the free-form surface mirror 35 are formed separately, a free-form surface mirror in which two free-form surfaces are integrally formed may be arranged.

In the image projecting device 120 shown in FIG. 5, the prisms serving as the light branching units 20a and 20b are arranged at positions overlapping the second region 12 and the third region, respectively, and are configured to branch paths of the first image light from the first region 11, the second image light from the second region 12, and the third image light from the third region. The first image displayed in the first region 11 reaches the viewpoint of the driver via the reflecting mirror 31, the free-form surface mirror 32, the external light cut filter 50, and the windshield 60. The second image displayed in the second region 12 reaches the viewpoint of the driver via the light branching unit 20a, the free-form surface mirror 33, and the direct display unit 40. Accordingly, the driver visually recognizes that the second image is displayed on the direct display unit 40. The third image displayed in the third region reaches the viewpoint of the driver through the light branching unit 20b, the reflecting mirror 34, the free-form surface mirror 35, the external light cut filter 50, and the windshield 60. As described above, since the first image light and the third image light travel with an enlarged light diameter in the viewpoint direction, the driver visually recognizes that the virtual images 70a and 70b are displayed as the projection images at positions farther than the windshield 60.

Also in the image projecting device 120 of the present embodiment, the image emitted from the image irradiation unit 10 is branched into the first image light, the second image light, and the third image light by the light branching units 20a and 20b, the first image light and the third image light are emitted via the windshield 60 by the first optical unit and the third optical unit, respectively, and the second image light is emitted by the second optical unit without passing through the windshield 60. Accordingly, it is possible to achieve space saving and an improvement in a degree of freedom in design while displaying instruments with the second image light and projecting auxiliary images as the projection images (virtual images) with the first image light and the third image light.

### (Fourth Embodiment)

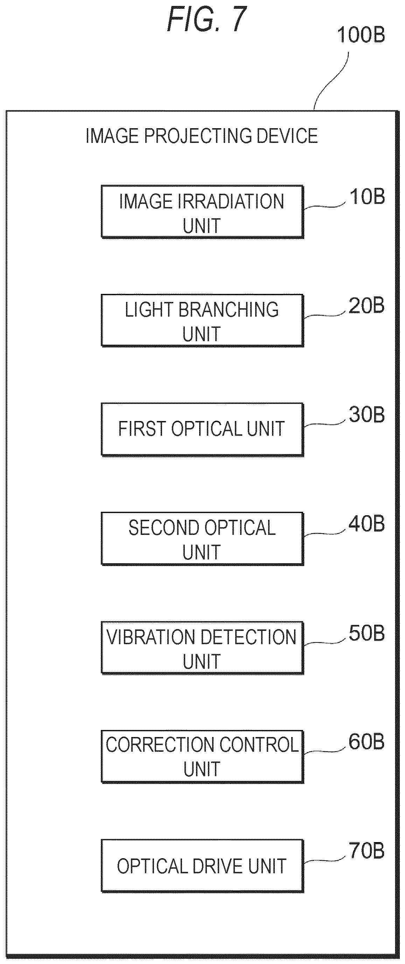

Next, a fourth embodiment of the present disclosure will be described with reference to FIG. 7. Description of contents overlapping with the first embodiment will be omitted. FIG. 7 is a block diagram showing a configuration of an image projecting device 100B according to the present embodiment. As shown in FIG. 7, the image projecting device 100B includes an image irradiation unit 10B, a light branching unit 20B, a first optical unit 30B, a second optical unit 40B, a vibration detection unit 50B, a correction control unit 60B, and an optical drive unit 70B. The light projected from the image projecting device 100B is emitted to a viewpoint position of a driver via a windshield (display unit) (not shown).

As will be described later, the image irradiation unit 10B includes a distant display region 13B and a near display region 12B that is configured to display a distant image and a near image, respectively.

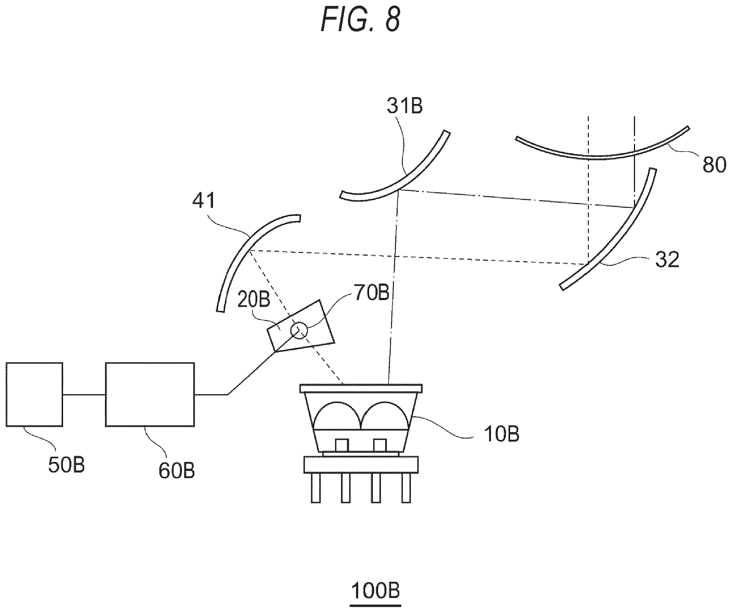

The light branching unit 20B is an optical member configured to branch light of an image emitted from the image irradiation unit 10B. The light branching unit 20B is configured to branch light into at least first image light that is a first image displayed in the distant display region 13B, and second image light that is a second image displayed in the near display region 12B. In the example shown in FIG. 8, the light branching unit 20B is a prism, and the prism is arranged to overlap the distant display region 13B of the image irradiation unit 10B. The first image light emitted from the distant display region 13B is reflected by a free-form surface mirror 41 along a path different from that of the second image light by the light branching unit 20B, and reaches the free-form surface mirror 32. The second image light emitted from the near display region 12B is reflected by a reflecting mirror 31B and reaches the free-form surface mirror 32.

The first optical unit 30B is a combination of optical elements configured to set the distant image displayed in the distant display region 13B as the first image light and configured to emit the first image light in the viewpoint direction via the display unit. An optical configuration of the first optical unit 30B is not limited, and a plurality of reflecting mirrors, lenses, prisms, and the like may be combined. The second optical unit 40B is a combination of optical elements configured to set the near image displayed in the near display region 12B as the second image light and configured to emit the second image light in the viewpoint direction via the display unit. An optical configuration of the second optical unit 40B is not limited, and a plurality of reflecting mirrors, lenses, prisms, and the like may be combined.

The vibration detection unit 50B is a part configured to acquire vibration information by detecting vibration during traveling or the like of a vehicle on which the image projecting device 100B is mounted. A specific configuration of the vibration detection unit 50B is not limited, and the vibration detection unit 50B may be an acceleration sensor such as a gyro sensor. Here, a case is shown in which the image projecting device 100B includes the vibration detection unit 50B inside the image projecting device 100B. The image projecting device 100B may be configured to acquire the vibration information by acquiring the vibration information by the vibration detection unit 50B separately provided outside the image projecting device 100B, and configured to transmit the vibration information to a control unit of the image projecting device 100B using an information communication unit.

The correction control unit 60B is configured to calculate a correction amount of an incident angle of the first image light to the display unit from the first optical unit 30B, based on the vibration information acquired by the vibration detection unit 50B, and is configured to control the optical drive unit 70B according to the correction amount to correct an imaging position of the first image. The correction control unit 60B is realized by a program executed by the control unit, and executes each step according to a predetermined procedure. Here, a case is shown in which the image projecting device 100 includes the correction control unit 60B inside the image projecting device 100. The correction control unit 60B separately provided outside the image projecting device 100B may be configured to calculate the correction amount based on the vibration information, and the correction amount may be transmitted using the information communication unit. A control signal for the optical drive unit 70B may be generated based on the correction amount calculated externally, and driving of the optical drive unit 70B may be controlled using the information communication unit.

The optical drive unit 70B is configured to change the incident angle of the first image light to the display unit by changing a light path of the first optical unit 30B. A configuration of the optical drive unit 70B is not limited, and may be, for example, a motor device configured to change an angle of the first optical unit 30B or the light branching unit 20B, an optical element configured to electrically control a traveling direction of light, or the like. The optical drive unit 70B corresponds to a first optical drive unit of the present disclosure. In a case where the optical drive unit 70B is a motor device, the optical drive unit 70B is preferably a stepping motor configured to precisely control a rotation angle.

FIG. 8 is a schematic diagram showing a configuration of the image projecting device 100B according to the present embodiment. As shown in FIG. 8, the image projecting device 100B includes the image irradiation unit 10B, the light branching unit 20B, the vibration detection unit 50B, the correction control unit 60B, the optical drive unit 70B, the reflecting mirror 31B, the free-form surface mirror 32, the free-form surface mirror 41, and an external light cut filter 80. Here, a combination of the free-form surface mirror 41 and the free-form surface mirror 32 corresponds to the first optical unit 30B of the present disclosure. A combination of the reflecting mirror 31, the free-form surface mirror 32, and the free-form surface mirror 41 corresponds to the second optical unit 40B of the present disclosure.

In the example shown in FIG. 8, in the image projecting device 100B, a part of the light emitted from the image irradiation unit 10B emits the first image light in the viewpoint direction via the first optical unit 30B and the windshield (display unit). In the image projecting device 100B, another part of the light emitted from the image irradiation unit 10B emits the second image light in the viewpoint direction via the second optical unit 40B and the windshield (display unit). A convex lens or a concave lens may be arranged on the first optical unit 30B or the second optical unit 40B as necessary, and the light diameter may be enlarged or reduced. The arrangement and orientation of the light branching unit 20B, the reflecting mirror 31B, the free-form surface mirror 32, the free-form surface mirror 41, and the external light cut filter 80 are not limited to those shown in FIG. 8.

The reflecting mirror 31B is an optical member on which the second image light emitted from the image irradiation unit 10B is incident, and which is configured to reflect the first image light toward the free-form surface mirror 32 direction. In the example shown in FIG. 8, the reflecting mirror 31B is a convex mirror. The reflecting mirror 31B may be a concave mirror, a plane mirror, a free-form surface mirror, or the like, as necessary.

The free-form surface mirror 32 is a concave mirror on which the second image light reflected by the reflecting mirror 31B is incident, and which is configured to reflect the second image light toward a windshield direction. A reflection surface of the free-form surface mirror 32 is designed such that the light diameter is enlarged toward the viewpoint direction of the driver in order to project the virtual image via the windshield.

The free-form surface mirror 41 is an optical member on which the first image light is incident via the light branching unit 20B, and which is configured to reflect the first image light toward the free-form surface mirror 32 direction. A reflection surface of the free-form surface mirror 41 is designed such that the light diameter is enlarged toward the viewpoint direction of the driver in order to project the virtual image via the windshield.

The external light cut filter 80 is an optical member that is arranged on a path of the first image light between the image irradiation unit 10B and the windshield, and that has a wavelength characteristic of blocking infrared light and/or ultraviolet light and transmitting visible light. In FIG. 8, the external light cut filter 80 is arranged between the windshield and the free-form surface mirror 32, and an arrangement location of the external light cut filter 80 is not limited as long as external light incident on the image irradiation unit 10B can be cut. By arranging the external light cut filter 80, the infrared light and/or ultraviolet light included in the external light such as solar light incident from above the windshield is blocked. Accordingly, when the solar light reaches an image display region of the image irradiation unit 10B via the free-form surface mirror 32, the reflecting mirror 31B, and the free-form surface mirror 41, it is possible to reduce a temperature rise of the image irradiation unit 10B and deterioration of a display surface. Since the external light cut filter 80 is configured to transmit the visible light, the first image light favorably transmits the external light cut filter 80 and does not affect the projection of the virtual image.

The windshield is configured to reflect the first image light and the second image light incident from the free-form surface mirror 32 on an inner surface of the vehicle toward the viewpoint direction, and is configured to transmit the light from the outside of the vehicle toward the viewpoint direction. The windshield corresponds to a display unit of the present disclosure.

The virtual image is an image displayed to be formed in the space when the first image light and the second image light reflected by the windshield reaches the viewpoint (eye boxes) of the driver or the like. A position where the virtual image is formed is determined by a spread angle when the light emitted from the image irradiation unit 10B travels in the viewpoint direction after being reflected by the reflecting mirror 31B, the free-form surface mirror 32, the free-form surface mirror 41, and the windshield.

In the example shown in FIG. 8, the optical drive unit 70B is a stepping motor, and is configured to change the angle of the light branching unit 20B. In the present embodiment, when the vehicle is traveling or the like, the correction control unit 60B is configured to calculate the correction amount based on the vibration information acquired by the vibration detection unit 50B, and is configured to send the control signal to the optical drive unit 70B. The optical drive unit 70B is driven according to the control signal, the light branching unit 20B is rotated about a direction perpendicular to the paper surface as a rotation axis, and an angle relative to the image irradiation unit 10B is changed. Accordingly, the light path of the first image light after passing through the light branching unit 20B is changed, and an imaging position of the distant image moves in the vertical direction of the paper surface.

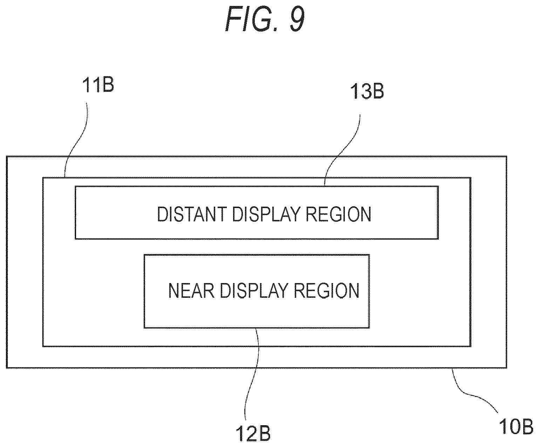

FIG. 9 is a schematic diagram showing a display region of the image emitted from the image irradiation unit 10B in the image projecting device 100B according to the present embodiment. An entire display region 11B is the entire region in which the image of the image irradiation unit 10B is displayed. A part of the entire display region 11B is the near display region 12B, and the other part is the distant display region 13B. The first image is displayed in the distant display region 13B, and the second image is displayed in the near display region 12B. The second image displayed in the near display region 12B includes, for example, a speed indicator, a sound volume indicator, and a traveling direction guide. The first image displayed in the distant display region 13B includes auxiliary information relating to driving, such as an alert image and emergency information.

In the image projecting device 100B shown in FIG. 8, the prism serving as the light branching unit 20B is arranged at a position overlapping the distant display region 13B, and is configured to branch paths of the first image light from the distant display region 13B and the second image light from the near display region 12B. The first image displayed in the distant display region 13B reaches the viewpoint of the driver via the light branching unit 20B, the free-form surface mirror 41, the free-form surface mirror 32, the external light cut filter 80, and the windshield. The second image displayed in the near display region 12B reaches the viewpoint of the driver via the reflecting mirror 31B, the free-form surface mirror 32, the external light cut filter 80, and the windshield. The light diameters of the first image light and the second image light are enlarged by the first optical unit 30B and the second optical unit 40B, respectively, and the first image light and the second image light reach the viewpoint, and thus the driver visually recognizes that the virtual images of the first image and the second image light by the first image light and the second image light are formed at a predetermined distance. Here, the imaging position of the virtual image is such that the first image is farther from the viewpoint position than the second image.

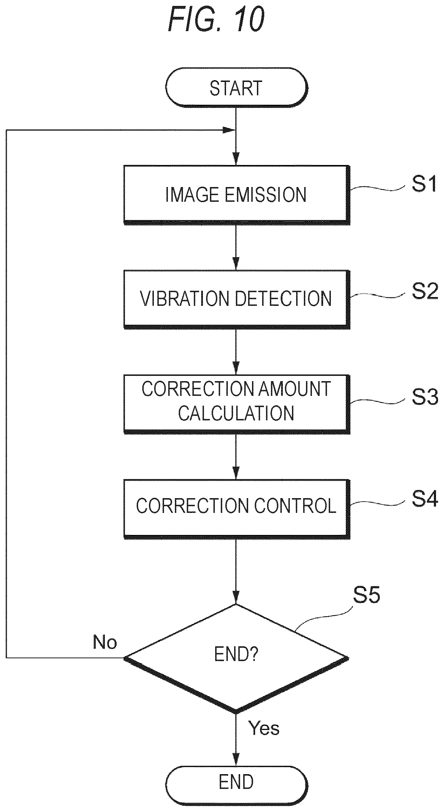

FIG. 10 is a flowchart showing steps of an image projecting method according to the present embodiment. First, in an image emission step of step S 1, a near image (second image) is displayed in the near display region 12B of the image irradiation unit 10B, and a distant image (first image) is displayed in the distant display region 13B, and the near image and the distant image are emitted as the first image light and the second image light, respectively. The emission and the imaging of the virtual image of the first image light and the second image light are the same as those described above. After the first image light and the second image light are emitted, the process proceeds to step S2.

Next, in a vibration detection step of step S2, vibration of the vehicle is detected by the vibration detection unit 50B to acquire the vibration information, and the acquired vibration information is sent to the correction control unit 60B. As a specific example, in a case where the vibration detection unit 50B is an acceleration sensor, information on an acceleration detected by the acceleration sensor is sent as the vibration information to the correction control unit 60B. Alternatively, the information on the acceleration detected by the acceleration sensor is integrated within a predetermined period, a change amount of a speed and a position is calculated, and the change amount of the position is sent to the correction control unit 60B as the vibration information. After sending the vibration information to the correction control unit 60B, the process proceeds to step S3.

Next, in a correction amount calculation step of step S3, the correction control unit 60B generates the control signal for the optical drive unit 70B, based on the acquired vibration information. In the case where the vibration information is the information on the acceleration, the change amount of the speed and the position is calculated by integrating within a predetermined period, and the change amount of the position is converted into a change amount in the incident angle on the windshield. A rotation angle of the light path in the first optical unit 30B is calculated from the change amount of the incident angle on the windshield, and the control signal is generated to change the light path of the first optical unit 30B in a direction opposite to the rotation angle. For example, in a case where the optical drive unit 70B is provided in the prism serving as the light branching unit 20B and a relative angle of the light branching unit 20B to the image irradiation unit 10B is changed, the rotation angle is obtained in consideration of a refractive index of the light branching unit 20B and the incident angle of the first image light. After generating the control signal, the correction control unit 60B sends the control signal to the optical drive unit 70B, and the process proceeds to step S4.

Next, in a correction control step of step S4, the optical drive unit 70B is driven based on the control signal generated in the correction amount calculation step, to change the light path of the first optical unit 30B. In a case where the optical drive unit 70B is provided in the light branching unit 20B, the light branching unit 20B is rotated to change the incident angle to the free-form surface mirror 41. As a result, the imaging position of the virtual image is controlled in a direction opposite to the vibration of the vehicle, and a positional deviation from a background due to the vibration of the vehicle is canceled out, thereby improving visibility. After drive control of the optical drive unit 70B is performed, the process proceeds to step S5.

Next, in an end determination step of step S5, it is determined whether the image projecting method is ended, and when the process does not end, the process proceeds to step S1, and feedback control of vibration correction is continued. When the method is ended, the control is ended after leaving a loop of the feedback control. Here, the correction amount calculation step and the correction control step are described as separate steps, and the correction amount may also be calculated in the correction control step.

As described above, in the image projecting device 100B and the image projecting method of the present embodiment, the first optical unit 30B is controlled, based on the vibration information, to correct the imaging position of the first image. Since the fluctuation of the imaging position due to the vibration is optically corrected by the feedback control, it is not necessary to provide a margin region in the entire display region 11B as shown in FIG. 9. Accordingly, an effective image display area is secured, the areas of the near display region 12B and the distant display region 13B are increased, and the large first image and second image can be projected. Accordingly, it is possible to improve the visibility of the image by preventing the fluctuation of the imaging position due to the vibration of the vehicle.

The present embodiment shows an example in which the distant image is emitted as the first image light and the near image is emitted as the second image light, the first image light may be formed as the near image at a nearby position, and the second image light may be formed as the distant image at a far position. However, in the distant image, a distance from the viewpoint position of the driver to the imaging position is long, and the deviation from the background caused by a shake of the imaging position due to the vibration tends to be large. Accordingly, the effect of preventing positional deviation with the background to improve the visibility can be enhanced by imaging the first image light at a far distance as the distant image and correcting the imaging position based on the vibration information.

In a case where the light branching unit 20 is a prism, it is easy to perform alignment and the optical design when partially covering the image irradiation unit 10B and branching a part of the light. In addition, compared to the case where the light is branched using a reflecting mirror, it is possible to reduce a size of the device by reducing a volume for securing for branching light. Since the prism is smaller and lighter than the reflecting mirror 31B, the free-form surface mirror 32, the free-form surface mirror 41, and the like, a torque when a rotation operation is performed by the optical drive unit 70B is reduced, and it is possible to reduce an output power and a size of the optical drive unit 70B. Since the prism is small in size and light in weight, it is possible to improve an accuracy at the time of the rotation operation and increase a rotation speed at the time of correction.

As described above, in the image projecting device and the image projecting method of the present embodiment, the correction amount of the incident angle of the first image light to the windshield (display unit) is calculated based on the vibration information, and the optical drive unit 70B is controlled according to the correction amount to correct the imaging position of the first image. Accordingly, it is possible to improve visibility of the image by preventing the fluctuation of the imaging position due to the vibration of the vehicle while ensuring the effective image display area.

### (Fifth Embodiment)

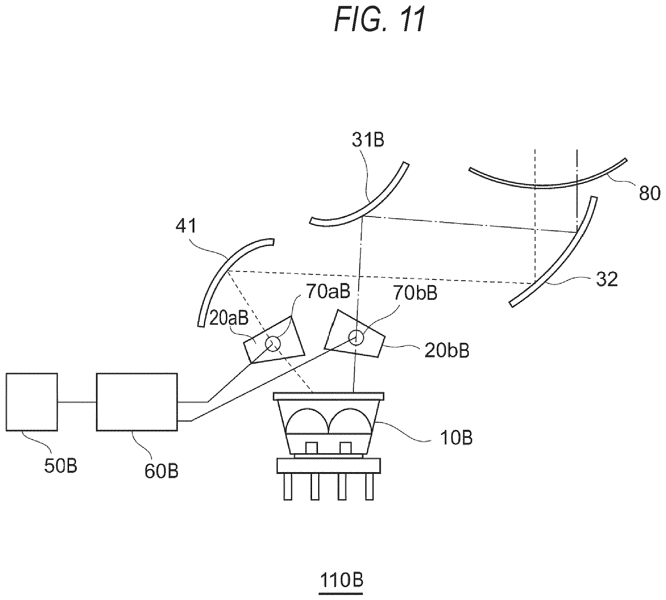

Next, a fifth embodiment of the present disclosure will be described with reference to FIG. 11. Description of contents overlapping with the fourth embodiment will be omitted. FIG. 11 is a schematic diagram showing the configuration of the image projecting device 110B according to the present embodiment. As shown in FIG. 11, the image projecting device 110B includes the image irradiation unit 10B, light branching units 20aB and 20bB, the reflecting mirror 31B, the free-form surface mirror 32, the free-form surface mirror 41, the vibration detection unit 50B, the correction control unit 60B, optical drive units 70aB and 70bB, and the external light cut filter 80. The present embodiment is different from the first embodiment in that the light branching units 20aB and 20bB and the optical drive units 70aB and 70bB are provided, and both the first optical unit 30B and the second optical unit 40B perform vibration correction.

In the image projecting device 110B shown in FIG. 11, the light branching unit 20aB is arranged at a position overlapping the distant display region 13B, and first image light from the distant display region 13B is branched toward a free-form surface mirror 41 direction. The light branching unit 20aB corresponds to a first light branching unit of the present disclosure. The light branching unit 20bB is arranged at a position overlapping the near display region 12B, and second image light from the near display region 12B is branched in a reflecting mirror 31B direction. The light branching unit 20bB corresponds to a second light branching unit of the present disclosure.

In the image projecting device 110B, a first image displayed in the distant display region 13B reaches a viewpoint of a driver via the light branching unit 20aB, the free-form surface mirror 41, the free-form surface mirror 32, the external light cut filter 80, and a windshield. A second image displayed in the near display region 12B reaches the viewpoint of the driver through the light branching unit 20bB, the reflecting mirror 31B, the free-form surface mirror 32, the external light cut filter 80, and the windshield.

The optical drive units 70aB and 70bB are provided in the light branching units 20aB and 20bB, respectively, and are configured to change a relative angle to the image irradiation unit 10B, and correspond to a first optical drive unit and a second optical drive unit of the present disclosure, respectively. The vibration detection unit 50B and the correction control unit 60B are configured to detect a vibration of a vehicle, configured to separately control the optical drive units 70aB and 70bB based on vibration information, and configured to correct fluctuations in imaging positions of the first image and the second image due to the vibration.

Also in the image projecting device and the image projecting method of the present embodiment, correction amounts of incident angles of the first image light and the second image light to the windshield (display unit) are calculated based on the vibration information, and the optical drive units 70aB and 70bB are controlled according to the correction amount to correct the imaging positions of the first image and the second image. Accordingly, it is possible to improve visibility of the image by preventing the fluctuation of the imaging position due to the vibration of the vehicle while ensuring the effective image display area.

### (Sixth Embodiment)

Next, a sixth embodiment of the present disclosure will be described. Description of contents overlapping with the fourth embodiment will be omitted. In the fourth embodiment and the fifth embodiment, the light emitted from the image irradiation unit 10B is branched using the light branching unit 20B, and projected as the distant image and the near image at different distances to form the virtual image. However, one virtual image may be formed by the first optical unit 30B without using the light branching unit 20B and the second optical unit 40B, using one image displayed by the image irradiation unit 10B. In this case, the optical drive unit 70B may be provided on the free-form surface mirror 41 to change a relative angle of the free-form surface mirror 41 to the image irradiation unit 10B. At this time, the optical drive unit 70B is controlled in the same manner as in the fourth embodiment, vibration information of a vehicle is acquired by the vibration detection unit 50B, a correction amount is calculated by the correction control unit 60B based on the vibration information, and a control signal for controlling driving of the optical drive unit 70B is generated.

Also in the image projecting device and the image projecting method of the present embodiment, a correction amount of an incident angle of first image light to a windshield (display unit) is calculated based on the vibration information, and the optical drive units 70B is controlled according to the correction amount to correct imaging positions of the first image and the second image. Accordingly, it is possible to improve visibility of the image by preventing the fluctuation of the imaging position due to the vibration of the vehicle while ensuring the effective image display area.

The present disclosure is not limited to the embodiments described above, and various modifications can be made within the scope of the claims. Embodiments obtained by appropriately combining technical techniques disclosed in different embodiments are also included in the technical scope of the present disclosure.

The present application is based on the priority based on Japanese patent application No. 2021-164153 filed on Oct. 5, 2021 and Japanese patent application No. 2021-175994 filed on Oct. 27, 2021, and all the description contents described in the Japanese patent application are incorporated.

## Claims

1. An image projecting device for emitting a projection image on a display unit configured to display a virtual image, the image projecting device comprising:
an image irradiation unit configured to emit an image;
a light branching unit configured to branch light for emitting the image into at least first image light and second image light;
a first optical unit configured to emit, as the projection image, the first image light in a viewpoint direction, via the display unit; and
a second optical unit configured to emit the second image light in the viewpoint direction, without passing through the display unit.

2. The image projecting device according to claim 1,
wherein the light branching unit includes a prism arranged on a path of a part of light emitted from the image irradiation unit.

3. The image projecting device according to claim 2,
wherein the prism is a part of the second optical unit.

4. The image projecting device according to claim 2,
wherein the prism is a part of the first optical unit.

5. The image projecting device according to claim 4,
wherein the prism contains an infrared light absorbing material.

6. The image projecting device according to any one of claims 1 to 5,
wherein the second optical unit includes a retardation film configured to convert the second image light into circularly polarized light.

7. The image projecting device according to any one of claims 1 to 5,
wherein the second optical unit includes a transmission screen having a rear surface irradiated with the second image light.

8. The image projecting device according to any one of claims 1 to 5,
wherein the second optical unit includes an enlarging optical unit configured to enlarge and to emit the second image light.

9. An image projecting device for emitting a projection image on a display unit configured to display a virtual image, the image projecting device comprising:
an image irradiation unit configured to emit a first image;
a first optical unit configured to emit, as first image light, the first image in a viewpoint direction, via the display unit; and
a first optical drive unit configured to change an incident angle of the first image light to the display unit, based on vibration information.

10. The image projecting device according to claim 9, further comprising:
a vibration detection unit configured to detect vibration and to acquire the vibration information; and
a correction control unit configured to:
calculate a correction amount of the incident angle, based on the vibration information; and
control the first optical drive unit, in accordance with the correction amount, to correct an imaging position of the first image.

11. The image projecting device according to claim 9 or 10,
wherein the image irradiation unit is further configured to emit a second image, and
the image projecting device further includes a second optical unit configured to emit the second image, as second image light, in the viewpoint direction, via the display unit.

12. The image projecting device according to claim 11,
wherein an imaging position of the virtual image of the first image is farther from a viewpoint position than an imaging position of the virtual image of the second image.

13. The image projecting device according to claim 11, further comprising:
a light branching unit configured to branch the first image light and the second image light,
wherein the first optical drive unit is configured to change an angle of the light branching unit to the image irradiation unit.

14. The image projecting device according to claim 13,
wherein the light branching unit is a prism.

15. The image projecting device according to claim 11, further comprising:
a second optical drive unit configured to change an incident angle of the second image light to the display unit, based on the vibration information.

16. The image projecting device according to claim 9,
wherein the first optical drive unit is configured to change an angle of any of optical members forming the first optical unit.

17. An image projecting method for emitting a projection image on a display unit configured to display a virtual image, the image projecting method comprising:
emitting a first image, as first image light, in a viewpoint direction, via the display unit;
acquiring vibration information; and
changing an incident angle of the first image light to the display unit, based on the vibration information to correct an imaging position of the first image.
